(19) Europäisches Patentamt
European Patent Office
Office européen des brevets

(11) **EP 1 756 620 B1**

(12) **FASCICULE DE BREVET EUROPEEN**

(45) Date de publication et mention
de la délivrance du brevet:
**23.01.2008 Bulletin 2008/04**

(51) Int Cl.:
**G01S 17/95** (2006.01)

(21) Numéro de dépôt: **05826779.0**

(22) Date de dépôt: **23.05.2005**

(86) Numéro de dépôt international:
**PCT/FR2005/050348**

(87) Numéro de publication internationale:
**WO 2006/016075 (16.02.2006 Gazette 2006/07)**

(54) **SYSTEME DE MESURE ANTICIPEE D'UNE TURBULENCE EN AMONT D'UN AERONEF**

SYSTEM ZUR MESSUNG DES PROJIZIERTEN TURBULENZFALLWINDS EINES LUFTFAHRZEUGS

SYSTEM FOR MEASUREMENT OF PROJECTED TURBULENCE DOWNWIND OF AN AIRCRAFT

(84) Etats contractants désignés:
**AT BE BG CH CY CZ DE DK EE ES FI FR GB GR HU IE IS IT LI LT LU MC NL PL PT RO SE SI SK TR**

(30) Priorité: **25.05.2004 FR 0451018**

(43) Date de publication de la demande:
**28.02.2007 Bulletin 2007/09**

(73) Titulaire: **AIRBUS France**
**31060 Toulouse (FR)**

(72) Inventeurs:
• **MIRAND, Pierre**
**F-31100 Toulouse (FR)**
• **LACABANNE, Michel**
**F-31170 Tournefeuille (FR)**
• **AVERSA, Nicky**
**F-31530 Montaigut sur Save (FR)**

(74) Mandataire: **Poulin, Gérard**
**BREVALEX**
**3, rue du Docteur Lancereaux**
**75008 Paris (FR)**

(56) Documents cités:
**US-A- 4 652 122    US-B2- 6 666 410**

• **ANONYMOUS: "Awiator" DEUTSCHES ZENTRUM FÜR LUFT- UND RAUMFAHRT, DLR, [Online] 16 novembre 2004 (2004-11-16), XP002313357 Extrait de l'Internet: URL:http: //www.dlr.de/rm/de/desktopdefault .aspx//tabid-323/522_read-4426//usetemplat e-printarticle/> [extrait le 2005-01-13]**
• **HAHN K U: "Coping with Wake Vortex" INTERNATIONAL CONGRESS OF AEROSPACE SCIENCES, ICAS 2002, 8 septembre 2002 (2002-09-08), pages 1-14, XP002313355 TORONTO, CANADA**
• **SOREIDE D ET AL: "Coherent Lidar Turbulence Measurement for Gust Load Alleviation" NASA TECHNICAL MEMORANDUM 104318, août 1996 (1996-08), XP002313356 USA cité dans la demande**

**Description**

**DOMAINE TECHNIQUE**

L'invention concerne un système de mesure anticipée d'une turbulence en amont d'un aéronef.
Dans la suite de la description, à titre d'exemple, l'aéronef considéré sera un avion.

**ÉTAT DE LA TECHNIQUE ANTÉRIEURE**

Dans les avions de transport de passagers de plus de 100 places, les moyens pour minimiser les effets d'une turbulence s'appuient sur des capteurs qui mesurent la réponse de l'avion une fois qu'il a pénétré dans la turbulence ou qui permettent de faire une estimation des composantes du vent lorsqu'il atteint l'avion. La minimisation des effets de la turbulence est usuellement réalisée au travers de la réduction des facteurs de charge et des vitesses angulaires de l'avion soumis aux conditions de turbulence, à la réduction des vibrations structurales induites dans le but d'amélioration du confort des passagers, enfin à la réduction des efforts appliqués sur la structure de l'avion. Des moyens de mesure situés sur le nez de l'avion permettent d'avoir une avance de phase par rapport au moment où la voilure est impactée par le vent. Mais, même sur les avions les plus grands, la distance entre son nez et sa voilure ne permet pas d'avoir une avance de phase de plus de 100ms. Avec la vitesse de sortie des actionneurs actuels, il n'est pas possible d'obtenir un braquage total des surfaces de contrôle, et par conséquent, une efficacité optimale en particulier des lois qui réduisent les charges ou augmentent le confort passager. Une telle efficacité peut être augmentée en installant des actionneurs plus rapides ou en gardant les actionneur actuels et en mesurant la vitesse du vent en avant de l'appareil. Des indications sur les capteurs et les méthodes utilisés actuellement dans l'aviation civile peuvent être trouvées dans un nombre important de documents. On peut citer par exemple le document référencé [1] en fin de description.
Pour palier les inconvénients des documents de l'art connu, l'invention a pour objet de mesurer à l'aide d'un lidar (LIDAR= «light Detection and Ranging », c'est-à-dire détection par ondes lumineuses et télémétrie) la vitesse du vent en avant de l'aéronef à une distance suffisante pour permettre d'actionner, à l'aide du système de commande de vol, les gouvernes de l'aéronef en avance de phase par rapport aux systèmes utilisant des informations classiques (ADC («Air Data Computer »), IRS (« Inertial Reference System »),....).
Il faut remarquer que l'utilisation d'un lidar pour réduire les conséquences de la rencontre par un aéronef d'une turbulence verticale est envisagée dans le document référencé[2].
On connaît un système de mesure anticipée d'une turbulence en amont d'un aéronef, comme décrit dans l'article de K.U. Hahn: "Coping with Wake Vortex", international Congress of Aerospace Sciences, ICAS 2002, pages 1-14, Toronto, Canada, 8 septembre 2002.

**EXPOSÉ DE L'INVENTION**

L'invention concerne un système de mesure anticipée d'une turbulence en amont d'un aéronef, par exemple un avion, disposé à bord de celui-ci, caractérisé en ce qu'il comprend :

- un lidar, par exemple un lidar ultra-violet, d'émission d'un faisceau optique vers l'avant de l'appareil et de réception du faisceau optique retrodiffusé,
- un dispositif de détection directe associé à des moyens de contrôle,
- un premier organe de traitement utilisant un premier algorithme de corrections internes, et
- un second organe de traitement utilisant un second algorithme de corrections externes délivrant d'éventuels signaux de commande aux actionneurs d'au moins une surface de contrôle de l'aéronef.

Avantageusement le système de l'invention comprend une partie optique émission et réception et une partie réception.
La partie optique comprend :

- un laser,
- éventuellement un multiplicateur de fréquence,
- un obturateur,
- un système de prisme et miroirs tournants,
- un télescope,
- une vitre traitée pour la fréquence laser choisie,
- une fibre optique,

la partie réception comprend :

- une fibre optique,
- un étalon Fabry-Perot disposé entre deux lentilles optiques,
- un filtre,
- un intensificateur d'images,
- un détecteur d'images et un organe de traitement mettant en oeuvre le premier algorithme.

Le système de l'invention se différencie du document référencé [2] notamment par les caractéristiques suivantes :

- la détection directe (le document référencé [2] n'envisage qu'une détection cohérente),
- la correction des effets des vitesses latérales et axiales des perturbations. Des expériences récentes ont montré que les effets de ces composantes commençaient à être ressentis d'une part à cause de la correction de plus en plus efficace des composantes verticales et d'autre part à cause de l'allongement des avions (le document référencé [2] n'envisage qu'une correction de la vitesse verticale).

Le système de l'invention présente de nombreux avantages :

- L'utilisation d'un lidar ultra-violet permet d'obtenir de meilleures performances qu'avec un lidar infra-rouge. Ce lidar peut être ainsi réalisé avec une diode infra-rouge et un multiplicateur de fréquence ou avec une diode ultra-violet. Une documentation sur les technologie lidar est donnée dans le document référencé [3].
- L'utilisation d'un système de détection directe permet de tirer partie de la rétrodiffusion de Mie et de Rayleigh (rétrodiffusion sur les aérosols et les molécules). La mesure en air clair est ainsi rendue possible. Une telle détection directe est définie dans le document référencé [3].
- L'utilisation d'une impulsion très courte (10ns) de commande de lidar permet d'obtenir un volume de mesure très petit, et ainsi d'avoir une information de vitesse bien localisée dans l'espace.
- L'utilisation d'un seul laser, avec balayage sur plusieurs points pour obtenir une information de vitesse (le lidar doppler ne permet d'obtenir une information de vitesse que dans la ligne de visée du laser). Un système de balayage possible est décrit dans le document référencé [4].
- L'intégration de ce lidar dans un aéronef permet d'obtenir les trois composantes de la vitesse du vent en avance de phase temporelle de d/V, avec d distance de visée, et V vitesse avion. La vitesse récupérée est située dans une zone que va traverser l'aéronef en amont de celui-ci, à une distance supérieure ou égale à 500 pieds (environ 150m). Ainsi, la mesure est représentative de la perturbation rencontrée, en faisant l'hypothèse de stationnarité sur la durée d/V.
- L'utilisation de l'information de vitesse du vent en association avec les paramètres aéronef permet de déterminer les ordres à appliquer aux surfaces de contrôle:

  - Pour réduire les charges de dimensionnement: on réduit les charges les plus importantes qui vont s'appliquer à l'aéronef lors de la rencontre de turbulences atmosphériques exceptionnelles. Ainsi, il est possible de réduire la masse de la structure de l'aéronef.
  - Pour réduire les charges de fatigue : on réduit les efforts appliqués à la voilure, dans le cas de rencontre de turbulence, pour que les efforts résultants correspondent à des cycles de fatigue moins élevés, et on augmente ainsi la durée de vie de la structure.
  - Pour améliorer le confort passager : Dans ce cadre, la réponse caractérisée par les accélérations des modes souples fuselage est réduite, pour que même lors de rencontre de faibles turbulences, les passagers ne soient pas incommodés par les vibrations.

- La loi de contrôle associée au système de détection peut être une loi de contrôle en boucle ouverte ou fermée.
- Une application des ordres les mieux adaptés pour réaliser le contrôle envisagé des actionneurs des gouvernes de l'aéronef est possible.

## BRÈVE DESCRIPTION DES DESSINS

La figure 1 illustre le système de l'invention disposé dans un avion,
La figure 2 illustre les différentes gouvernes d'un avion,

La figure 3 illustre le principe de fonctionnement du système de l'invention en boucle ouverte.
La figure 4 illustre le principe du fonctionnement du système de l'invention en boucle fermée.
La figure 5 illustre le système de balayage du système de l'invention.

## EXPOSÉ DÉTAILLÉ DE MODES DE RÉALISATION PARTICULIERS

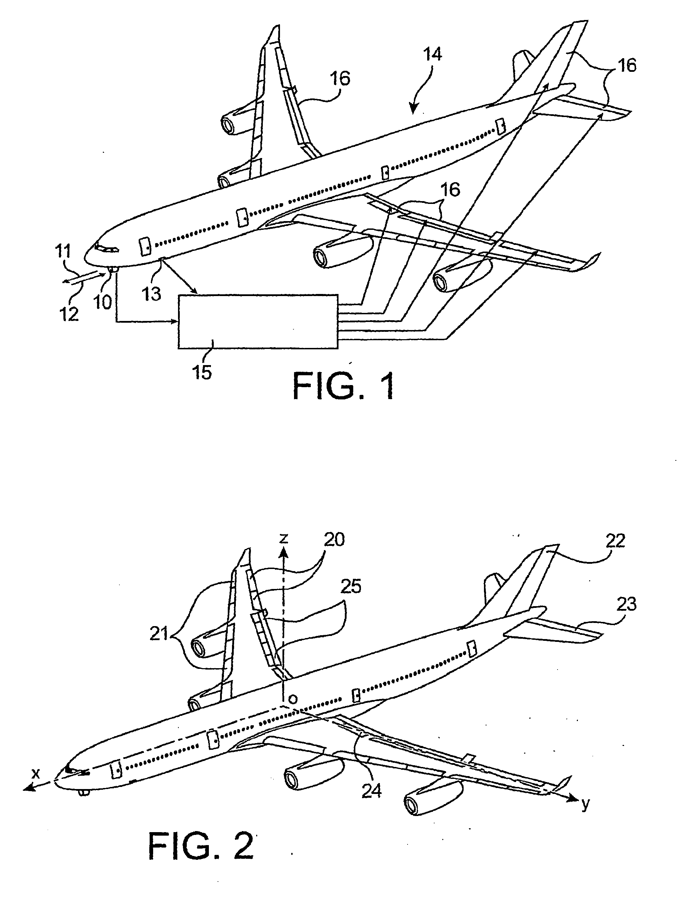

Comme illustré sur la figure 1, dans le système de l'invention les signaux issus d'un lidar 10, qui émet un faisceau laser 11 vers l'avant et reçoit le faisceau rétrodiffusé 12, ainsi que des signaux issus de capteurs 13 de l'avion 14 sont entrés dans les calculateurs de commandes de vol 15 qui donnent des ordres aux gouvernes 16.

Comme illustré sur la figure 2, ces gouvernes 14 peuvent ainsi être :

- les ailerons 20, qui sont des gouvernes de roulis ou de gauchissement qui donnent un moment par rapport à l'axe Ox (axe avion),
- les becs 21, qui sont utilisés au décollage et en approche pour reculer le point de décrochage de la voilure,
- la gouverne de direction 22, qui est une gouverne de lacet ou de direction qui donne un moment par rapport à l'axe Oz,
- les gouvernes de profondeur 23, qui sont des gouvernes de tangage ou de profondeur, qui donnent un moment par rapport à l'axe Oy,
- les « spoilers »24, qui sont utilisés principalement à l'atterrissage pour conserver l'avion plaqué au sol et augmenter l'efficacité de freinage, et qui peuvent être utilisés en vol pour effectuer des descentes d'urgence,
- les volets 25, qui sont utilisés au décollage et en approche pour obtenir de la portance supplémentaire à basse vitesse,
- des surfaces de contrôle rapides, tels que mini-TEDs (« Training Edge Devices ») ou « sakuraï » (voir le document référencé [6]), qui peuvent aussi être utilisées pour le contrôle direct de la portance.

Sur cette figure, le point O est le centre de gravité de l'avion.

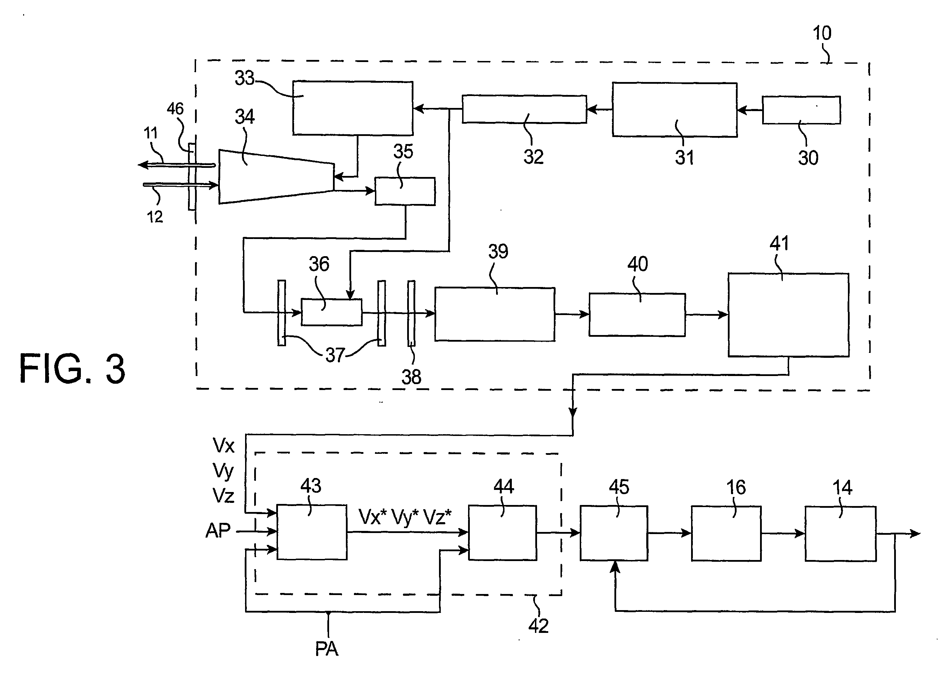

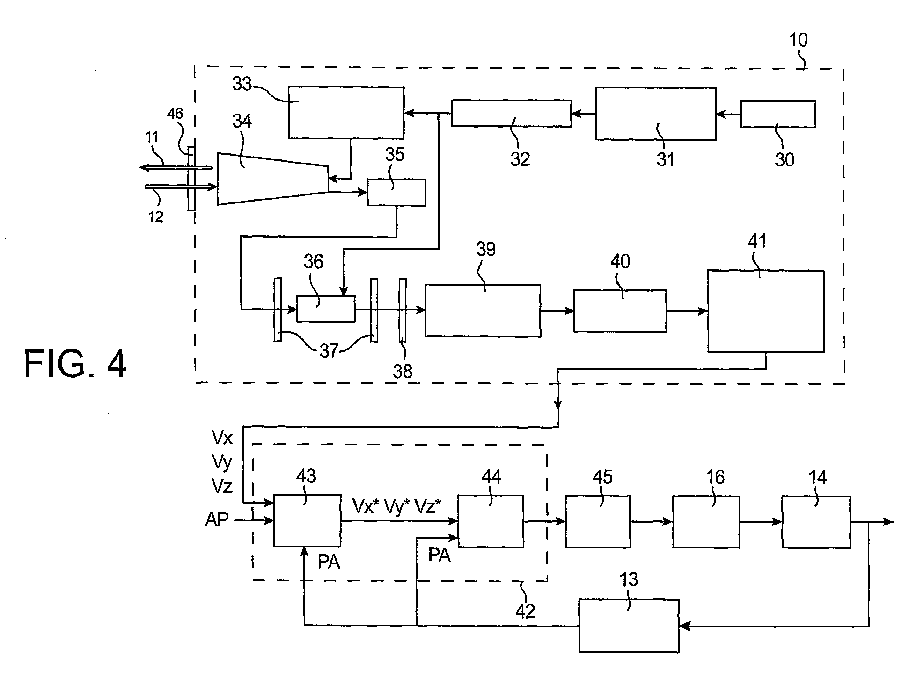

Comme illustré sur les figures 3 et 4 le système de l'invention comprend un lidar 10 qui est formé de parties optique émission et réception, et d'une partie réception.

La partie optique comprend :

- un laser 30,
- un éventuel multiplicateur de fréquence 31,
- un obturateur 32,
- un système de prisme et de miroirs tournants 33,
- un télescope 34,
- une vitre traitée pour la fréquence laser choisie 46,
- une fibre optique 35.

La partie réception comprend :

- un étalon Fabry-Perot 36 disposé entre deux lentilles optiques 37,
- un filtre 38,
- un intensificateur d'images 39,
- un détecteur d'images 40 et un organe de traitement 41 mettant en oeuvre un premier algorithme (corrections internes).

Le système de l'invention est relié aux calculateurs de commandes de vol 42 qui réalisent :

- une correction des vitesses 43 en utilisant les vitesses du vent calculées $V_x$, $V_y$ et $V_z$, les actions du pilote AP, et les paramètres avions quasi-statiques PA (masse, centre de gravité, Vtas, Vcas, vitesses angulaires),
- un calculateur 44, qui détermine les ordres gouverne à appliquer à partir des vitesses angulaires, accélérations,
- les lois de contrôle de l'avion 45, qui utilisent les paramètres de l'avion « quasi-statiques » PA (masse, centre de gravité, Vtas, Vcas, vitesses angulaires, accélérations).

La partie optique émission permet de délivrer au laser 30 des impulsions très courtes (par exemple de l'ordre de 10ns), avec l'énergie souhaitée pour obtenir une distance de mesure désirée. Le faisceau laser utilisé est avantageusement situé dans le proche ultraviolet, et permet d'obtenir une bonne qualité de signal, grâce à une faible longueur d'onde.

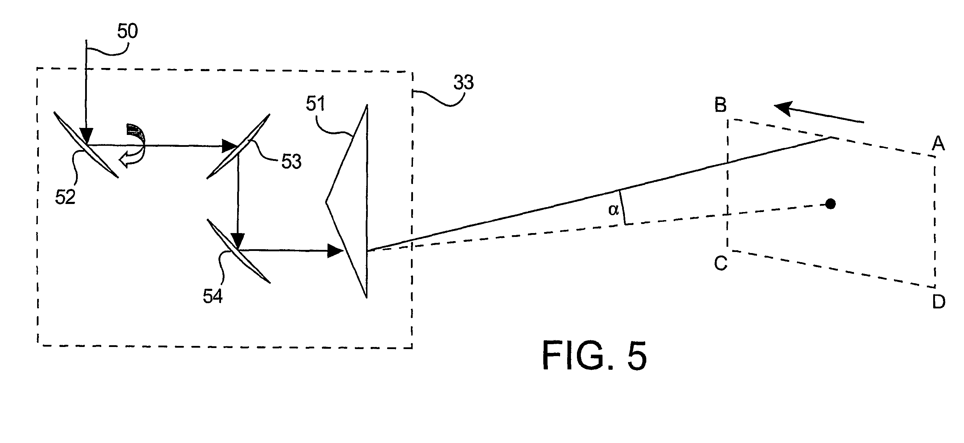

Le faisceau de sortie 11 est ensuite séparé par le système de prisme et de miroirs tournants 33. Ce système 33, comme illustré sur la figure 5, envoie un faisceau 50 sur un prisme 51 par l'intermédiaire de miroirs 52, 53 et 54 et permet de séparer le faisceau de sortie en un faisceau qui va balayer alternativement une direction sur quatre possibles, et donc ainsi mesurer la vitesse selon quatre directions à +/-α° par rapport à l'axe avion Ox : plus l'angle est élevé, plus la précision est importante. On choisit par exemple 10°. On choisit d'utiliser une nouvelle direction toutes les 15ms. Un tour complet ABCD a donc lieu en 60ms.

Le faisceau passe ensuite dans le télescope 34, qui conserve un faisceau de très faible divergence (de l'ordre de 1 mrad). Ce faisceau traverse ensuite une vitre traitée 46 pour avoir un facteur de transmission élevé pour la longueur d'onde choisie, et pénètre dans l'atmosphère.

Le faisceau émis 11 impacte les particules et molécules de l'atmosphère situées sur son trajet. Une partie de ce signal est alors rétrodiffusée (signal 12), et est récupérée par le télescope 34.

L'obturateur 33 permet de ne récupérer que l'information contenue dans un volume temporel situé entre 2d/c et 2(d/c+τ), avec d: distance de visée souhaitée, c : vitesse de la lumière, τ : durée de chaque impulsion.

Dans la partie optique réception les informations contenues dans le faisceau 12 sont séparées par paquets de 15ms, correspondant à une direction particulière.

Le faisceau reçu transite ensuite par la fibre optique 35 pour entrer dans la partie réception.

Cette partie réception constitue le coeur du traitement de l'information. Elle est constitué de l'étalon Fabry-Perot 36, qui permet de créer des cercles d'interférence. Le détecteur d'images 40, par exemple une caméra CCD, permet alors de filmer les variations de taille des différents cercles, qui sont liées aux variations de vitesse du vent en amont de l'avion.

Le premier algorithme traite les données de variation de diamètre de cercles issus de ces images brutes. D'autres paramètres internes et externes au système laser (température, puissance d'émission, position du télescope par rapport aux références avion, ...) sont aussi nécessaires pour calculer la valeur des composantes de la vitesse relative du vent. Un système de traitement de l'information est ainsi décrit dans le document référencé [5].

Ces composantes de vitesse sont alors transmises aux calculateurs de l'avion 42, qui disposent des informations sur les actions pilote AP et l'état actuel de l'avion PA (par exemple les facteurs de charge, les vitesses angulaires de l'avion...). Un deuxième algorithme utilise alors les informations de vitesse issues du premier algorithme, et les informations avions (Tas ou « True Air Speed », ordres pilote, facteurs de charges (nz principalement)) pour déterminer les amplitudes de la perturbation rencontrée.

Ce deuxième algorithme permet :

- de « soustraire » les vitesses induites par le mouvement mécanique du vol de l'avion des vitesses Vx, Vy et Vz,
- d'élaborer les ordres gouvernes permettant de minimiser les réponses avion, de réduire les charges suivant les choix effectués.

Ce deuxième algorithme peut, comme illustré sur les figures 3 et 4, être utilisé, moyennant quelques modifications, en boucle ouverte ou en boucle fermée.

1) Boucle ouverte:

Dans ce cas, comme illustré sur la figure 3, on utilise l'information de turbulence pure pour donner un ordre aux gouvernes 16 de l'avion 14. Il n'y a pas de rebouclage avec les informations inertielles ou anémométriques de l'avion 14.

Pour donner un exemple, on suppose l'avion en croisière, avec nz=1g, avec une vitesse Vtas connue. Le lidar mesure une vitesse V, qui peut être égale ou non à Vtas. Si on a un vent vertical Vzvent, on a Vzvent=Vzalgo(Vz algorithme)-Vztas. Ce vent vertical a une influence sur la portance, l'incidence et le facteur de charge de l'avion.

Le deuxième algorithme permet, après avoir calculé les composantes vitesses du vent, de minimiser l'impact de ce vent sur l'avion.

Pour cela, un ordre gouvernes est donné. Dans cet exemple on braque les gouvernes de profondeur de x°, ce qui permet d'anticiper l'effet du vent sur l'avion. Dans sa forme la plus simple, telle que décrite dans l'exemple, l'ordre donné aux gouvernes en boucle ouverte pourrait être de la forme :

$$\delta Q = K(\omega) \, Vzvent$$

2) Boucle fermée :

Dans ce cas, comme illustré sur la figure 4, on utilise l'information concernant les composantes du vent donnée par le lidar, mais aussi l'effet d'un ordre donnée aux gouvernes 16 sur le comportement avion, en utilisant tous le capteurs 13 nécessaires existants sur l'avion 14.

Sans faire d'hypothèses simplificatrices, et en prenant en compte trois composantes du vent, l'ordre donné aux gouvernes peut être de la forme :

$$\begin{pmatrix} \delta p \\ \delta q \\ \delta r \end{pmatrix} = \begin{pmatrix} k11(\omega) & k12(\omega) & k13(\omega) \\ k21(\omega) & k22(\omega) & k23(\omega) \\ k31(\omega) & k32(\omega) & k33(\omega) \end{pmatrix} \begin{pmatrix} Vxvent \\ Vyvent \\ Vzvent \end{pmatrix} + \underline{K_1(\omega)} \begin{pmatrix} nx - nxpilote \\ ny - nypolote \\ nz - nzpolote \end{pmatrix} + \underline{K_2(\omega)} \begin{pmatrix} p - ppilote \\ q - qpilote \\ r - rpilote \end{pmatrix}$$

avec $\omega$ : pulsation.

$\delta p$ : angle de braquage des gouvernes de roulis.

$\delta q$ : angle de braquage des gouvernes de tangage.

$\delta q$ : angle de braquage des gouvernes de lacet.

nx, ny, xz : facteurs de charge selon X, Y, Z.

Les différents coefficients kii peuvent contenir ou non des logiques d'activation suivant le but recherché. Les matrices $K_1$ et $K_2$ (matrices 3x3) peuvent aussi contenir des logiques d'activation et des retards.

Il est clair que ce qui a été présenté ici l'a été à titre d'exemple, et que la description pourrait être étendue à d'autre surfaces et types de contrôle. Bien que des termes spécifiques soient employés ici, ils le sont dans un but descriptif, et non limitatif.

## REFERENCES

[1] «Les avions de transport modernes et futurs » (Peyrat-Armandy, A, Teknéa, pages 315-325, 1997)

[2] « Coherent lidar turbulence measurement for gust load alleviation » de D. Loreide, R.K. Bogne, L.D. Ehernberger, H. Bagley (NASA-TM-104318, Août 1996)

[3] « Imaging techniques and systems: lidar » de P.S. Argall, R.J. Sica (Encyclopedia of Imaging Science and technology J. Hornak, New-York, Wiley, 869-889, 2002)

[4] WO 2004/003626

[5] DE 10316762

[6] US 6 601 801

## Revendications

**1.** Système de mesure anticipée d'une turbulence en amont d'un aéronef, disposé à bord de celui-ci, **caractérisé en ce qu'**il comprend

- un lidar d'émission d'un faisceau optique vers l'avant de l'aéronef et de réception du faisceau optique rétrodiffusé,
- un dispositif de détection directe associé à des moyens de contrôle,
- un premier organe de traitement utilisant un algorithme de corrections internes, et
- un second organe de traitement utilisant un algorithme de correction externes délivrant d'éventuels signaux de commandes aux actionneurs d'au moins une surface de contrôle de l'aéronef.

**2.** Système selon lequel la revendication 1, dans lequel le lidar est un lidar ultra-violet.

**3.** Système selon lequel la revendication 1, comprenant une partie optique émission et réception et une partie réception.

**4.** Système selon la revendication 3, dans lequel la partie optique comprend :

- un laser (30),
- un obturateur (32),
- un système de prisme et miroirs tournants (33),
- un télescope (34),
- une vitre traitée pour la fréquence laser choisie (46),
- une fibre optique (35).

**5.** Système selon la revendication 4, comprenant un multiplicateur de fréquence (31) en sortie du laser (30).

**6.** Système selon la revendication 3, dans lequel la partie réception comprend :

- un étalon Fabry-Perot (36) disposé entre deux lentilles optiques (37),
- un filtre (38),
- un intensificateur d'images (39),
- un détecteur d'images (40) et un organe de traitement (41) mettant en oeuvre le premier algorithme.

**Claims**

**1.** System for anticipated measurement of turbulence upstream of an aircraft, placed on-board the latter, **characterised in that** it includes:

- a lidar for transmitting an optical beam toward the front of the aircraft and receiving the backscattered optical beam,
- a direct detection device associated with control means,
- a first processing component using a first internal correction algorithm, and
- a second processing component using a second external correction algorithm delivering possible command signals to the actuators of at least one aircraft control surface.

**2.** System according to claim 1, **characterised in that** the lidar is an ultraviolet lidar.

**3.** System according to claim 1, **characterised in that** it includes an optical transmission and reception portion and a reception portion.

**4.** System according to claim 3, **characterised in that** the optical portion includes:

- a laser (30),
- an obturator (32),
- a rotating mirror and prism system (33),
- a telescope (34),
- a window treated for the laser frequency selected (46), and
- an optical fibre (35).

**5.** System according to claim 4, **characterised in that** it includes a frequency multiplier (31) at the output of the laser (30).

**6.** System according to claim 3, **characterised in that** the reception portion includes:

- a Fabry-Perot etalon (36) placed between two optical lenses (37),
- a filter (38),
- an image intensifier (39), and
- an image detector (40) and a processing component (41) implementing the first algorithm.

**Patentansprüche**

**1.** Vorab-Meßsystem einer Turbulenz vor einem Luftfahrzeug, das an Bord desselben angeordnet ist, **dadurch ge-**

**kennzeichnet, dass** es umfasst:

- einen Lidar zum Emittieren eines Lichtstrahls vor das Luftfahrzeug und zum Empfangen des zurückgeworfenen Lichtstrahls,
- eine Direkt-Erfassungsvorrichtung, die mit Steuermitteln verbunden ist,
- ein erstes Verarbeitungsorgan, das einen Algorithmus interner Korrekturen anwendet, und
- ein zweites Verarbeitungsorgan, das einen Algorithmus externer Korrekturen anwendet und eventuelle Steuersignale an die Aktuatoren mindestens einer Steuerfläche des Luftfahrzeugs liefert.

2. System nach Anspruch 1, wobei der Lidar ein ultravioletter Lidar ist.

3. System nach Anspruch 1 mit einem optischen Emissions- und Empfangsabschnitt und einem Empfangsabschnitt.

4. System nach Anspruch 3, wobei der optische Abschnitt umfasst:

- einen Laser (30),
- einen Verschluss (32),
- ein Prisma- und Drehspiegelsystem (33),
- ein Teleskop (34),
- ein für die gewählte Laserfrequenz behandeltes Glas (46),
- eine optische Faser (35).

5. System nach Anspruch 4, mit einem Frequenzmultiplikator (31) am Ausgang des Lasers (30).

6. System nach Anspruch 3, wobei der Empfangsabschnitt umfasst:

- ein zwischen zwei optischen Linsen (37) angeordnete Fabry-Perot-Messeinrichtung (36),
- einen Filter (38),
- einen Bildverstärker (39),
- einen Bilddetektor und ein Verarbeitungsorgan (41), welches den ersten Algorithmus anwendet.

FIG. 1

FIG. 2

FIG. 3

EP 1 756 620 B1

FIG. 4

FIG. 5

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004003626 A
- DE 10316762
- US 6601801 B

**Littérature non-brevet citée dans la description**

- **K.U. HAHN.** Coping with Wake Vortex. *international Congress of Aerospace Sciences, ICAS 2002,* 08 Septembre 2002, 1-14
- **PEYRAT-ARMANDY, A.** *Les avions de transport modernes et futurs,* 1997, 315-325
- **D. LOREIDE ; R.K. BOGNE ; L.D. EHERNBERGER ; H. BAGLEY.** *Coherent lidar turbulence measurement for gust load alleviation,* Août 1996
- Imaging techniques and systems: lidar. **P.S. ARGALL ; R.J. SICA.** Encyclopedia of Imaging Science and technology. Wiley, 2002, 869-889